# EUROPEAN PATENT SPECIFICATION

(11) **EP 2 848 647 B1**
(45) Date of publication and mention of the grant of the patent: **30.08.2017**
(21) Application number: 13788171.0
(22) Date of filing: 30.04.2013
(51) Int. Cl.: C08L 7/00, B60C 1/00, C08L 7/02

(54) **NATURAL RUBBER, RUBBER COMPOSITION COMPRISING NATURAL RUBBER AND METHOD FOR PRODUCING SAME, AND TIRE**
NATURKAUTSCHUK, KAUTSCHUKZUSAMMENSETZUNG MIT NATURKAUTSCHUK UND VERFAHREN ZUR HERSTELLUNG DAVON SOWIE REIFEN
CAOUTCHOUC NATUREL, COMPOSITION DE CAOUTCHOUC COMPRENANT LE CAOUTCHOUC NATUREL ET PROCÉDÉ DE PRODUCTION ASSOCIÉ, ET PNEU

(30) Priority: 09.05.2012 JP 2012107841; 09.05.2012 JP 2012107842
(43) Date of publication of application: 18.03.2015
(73) Proprietor: Bridgestone Corporation, Tokyo 104-8340 (JP)
(72) Inventor: TSUCHIDA, Kazutaka, Tokyo 187-8531 (JP); YONEMOTO, Makiko, Tokyo 187-8531 (JP)
(74) Representative: Oxley, Robin John George
(86) International application number: PCT/JP2013/062641
(87) International publication number: WO 2013/168640

(56) References cited:
- EP-A2- 0 942 042
- WO-A1-2010/072762
- JP-A- 2005 528 272
- JP-A- 2009 102 451
- JP-A- 2010 538 110
- JP-A- 2012 122 796
- US-A1- 2010 294 407
- SEUNGHO LEE ET AL: "Determination of Molecular Weight and Gel Content of Natural Rubber Using Thermal Field-Flow Fractionation", MACROMOLECULES, vol. 28, no. 18, 1 August 1995 (1995-08-01), pages 6354-6356, XP55119437, ISSN: 0024-9297, DOI: 10.1021/ma00122a050

## Description

### Field of the Invention

The present invention relates to a natural rubber, a rubber composition containing the natural rubber, and a tire, specifically to a natural rubber having an excellent breaking resistance, a rubber composition containing the natural rubber and a tire.

### Background Art

A natural rubber is used frequently in many fields including industrial products such as tires, rubber belts, rubber rolls, praders, and fenders, sporting goods such as tennis balls, basket balls, soccer balls, and volley balls. In recent years, a natural rubber is used frequently as well in the medical field and the biological field. Particular in a case of tires, a natural rubber is used as a material for many components constituting rubber tires, such as treads, side walls, ply coating rubbers, and bead filler.

When a natural rubber is used for the above products such as tires, the natural rubber used therefor is required to be improved particular in a breaking resistance and a wear resistance.

A method in which after dissolving rubber in an organic solvent such as tetrahydrofuran (THF), impurities such as rubber components insoluble in THF are separated by filtrating through a filter and in which a relative molecular weight of the rubber is measured based on a standard calibrant by gel permeation chromatography, GPC, has so far been carried out as a method for measuring a molecular weight of a gelatinized or multi-coupled natural rubber. However, the above measuring method involves the problem that ultrahigh polymers contained in natural rubbers and diene base synthetic rubbers are trapped by such as a filter and are not measured.

Also, in recent years, a method for measuring and analyzing an absolute molecular weight of a higher order structure of a natural rubber and a diene base synthetic rubber by using a field flow fractionation (hereinafter referred to as "FFF") equipment or an FFF and multi-angle light scattering (hereinafter referred to as "MALS") detector for structural analysis of a natural rubber and a diene base synthetic rubber has been proposed (refer to non-patent documents 1 to 3).

The present inventors have tried to improve the above measuring methods and have made it possible to analyze a higher order structure of a natural rubber and a diene base synthetic rubber, that is, measure and analyze an absolute molecular weight for an ultrahigh molecule by the following method.

A new measuring and analyzing method is a method in which a rubber solution prepared by dissolving rubber for measurement in tetrahydrofuran is centrifuged at a centrifugal acceleration of 10,000 to 1,000,000 G and in which soluble components contained in the solution are measured by means of a field flow fractionation equipment connected with a multi-angle light scattering detector (refer to patent document 1). JP2005528272 discloses a tire for vehicle wheels comprising a sealing composition comprising at least one high molecular weight amorphous polymer, at least one low molecular weight amorphous polymer and at least one reinforcing filler. WO2010/072762 teaches a reinforced rubber composition comprising an elastomeric matrix, a reinforcing filler, a coupling agent and a dihydrazide compound.

### Conventional art document

### Patent document

Patent document 1: Japanese Patent Application Laid-Open No. 2012-122796

### Non-patent document

Non-patent document 1: Journal of Natural Rubber Research, 1997, vol. 12 (3), p. 154 to 165
Non-patent document 2: Macromolecules, 1995, 28, p. 6354 to 6356
Non-patent document 3: Bull. Korean Chem. Soc., 2000, vol. 21, No. 1, p. 69 to 74

### DISCLOSURE OF THE INVENTION

### Problem to be solved by the Invention

In conventional natural rubbers, rubber molecules are not sufficiently multi-coupled, a breaking resistance, and the like are not satisfactory. Also, conventional gelatinized natural rubbers are partially multi-coupled, but the component provided with a high molecular weight is multi-coupled to an ultrahigh level, and an adverse effect is notably exerted by gelatinization to deteriorate processability of the rubber during blending. Also, inferior dispersion is brought about by the above multi-coupling of the rubber to an ultrahigh level to rather deteriorate a breaking resistance, a wear resistance and the like.

Problems on deterioration of the performances brought about by the above multi-coupling of the rubber to an ultrahigh level have been gradually clarified by carrying out a measuring and analyzing method, FFF-MALS method, of rubber proposed by the present inventors.

An object of the present invention is to provide a natural rubber which maintains processability and is excellent in a breaking resistance and a wear resistance, a rubber composition containing the above natural rubber, and a tire prepared by using the same.

### Means to solve the Problem

The present inventors have found that a natural rubber is improved in a breaking resistance and a wear resistance by increasing high molecular weight components contained in the natural rubber and that a natural rubber containing a high molecular weight components having an absolute molecular weight of 5,000,000 or more contributes to an improvement in the characteristics described above to a large extent, and on the other hand, the present inventors have found that processability is deteriorated when an ultrahigh molecular weight component having an absolute molecular weight of exceeding 50,000,000 contained in the natural rubber is increased. Thus, the present inventors have come to solve the problems described above.

That is, the natural rubber of the present invention is a natural rubber or a natural rubber latex, wherein the natural rubber or the natural rubber latex contains 15 % by mass or more of a high molecular weight component, P1, having a molecular weight of 5,000,000 to 50,000,000 and 40 % by mass or less of an ultrahigh molecular weight component, P2, having a molecular weight of exceeding 50,000,000, and the relation between mass% of P1 and mass% of P2 is 1.5 × mass% of P1 ≥ mass% of P2, each measured by the following measuring method. In particular, the relation between mass% of P1 and mass% of P2 is mass% of P1 ≥ mass% of P2, and the natural rubber contains preferably 20 % by mass or more of P1. The natural rubber is provided with the above composition of the high molecular weight components, whereby the effects of a breaking resistance, a wear resistance, and the like become more notable.

In the measuring method of a rubber molecular weight, a rubber solution is centrifuged at a centrifugal acceleration of 10,000 to 1,000,000 G, and soluble components contained in the solution are measured by means of a field flow fractionation equipment with a multi-angle light scattering detector. The above measuring method for a molecular weight of rubber is different from a method for measuring a relative molecular weight based on a standard calibrant by conventional gel permeation chromatography, GPC, and the measuring method is a method for measuring an absolute molecular weight.

In the natural rubber of the present invention, a natural rubber latex or a natural rubber is preferably gelatinized or multi-coupled, and the natural rubber latex or the natural rubber is preferably reduced in a water content to 40 % by mass or less and held for 72 hours or longer. Further, the natural rubber latex is preferably coagulated by an acid coagulating agent and subjected to dehydrating treatment within 8 hours after adding the acid coagulating agent.

In the natural rubber of the present invention, 16 parts by mass or more of a skim latex is preferably added to 100 parts by mass of the natural rubber latex as solid.

In the natural rubber of the present invention, a natural rubber latex or a natural rubber is preferably gelatinized or multi-coupled by adding a cross-linking agent thereto.

The above natural rubber latex gelatinized or multi-coupled can be provided with the preferred molecular weight composition of the high molecular weight component, P1, and the ultrahigh molecular weight component, P2, each described above, and the natural rubber latex is surely excellent in processability, a breaking resistance and a wear resistance.

The production process for a natural rubber according to the present invention is characterized by that a natural rubber latex or a natural rubber is controlled to a water content of 40 % by mass or less and held for 72 hours or longer, whereby produced is the natural rubber containing 15 % by mass or more of the high molecular weight component, P1, and 40 % by mass or less of the ultrahigh molecular weight component, P2, and the relation between mass% of P1 and mass% of P2 is 1.5 × mass% of P1 ≥ mass% of P2,each measured by the measuring method described above.

In the production process for a natural rubber according to the present invention, the natural rubber latex is preferably coagulated by an acid coagulating agent and subjected to dehydrating treatment within 8 hours after adding the acid coagulating agent. Also, 16 % by mass or more of a skim latex as solid is preferably added to 100 % by mass of the natural rubber latex as solid.

Further, the present invention comprises the inventions of a rubber composition containing the natural rubber of the present invention and a tire prepared by using the above rubber composition. In the above rubber composition and tire, use of the above natural rubber makes it possible to further enhance a breaking resistance and a wear resistance.

### Effect of the Invention

The natural rubber according to the present invention contains therein a large amount of a high molecular weight component and is excellent in a breaking resistance and a wear resistance, and since the natural rubber contains less ultrahigh molecular weight component, P2, it is inhibited from being deteriorated in processability to stably provide the natural rubber with excellent characteristics. The above makes it possible to provide the natural rubber with excellent physical properties and enhance as well the physical properties of the rubber composition and the tire prepared by using the above natural rubber.

### DESCRIPTION OF THE PREFFERED EMBODIMENTS

The present invention shall be explained below in detail.

The natural rubber according to the present invention contains 15 % by mass or more of a high molecular weight component, P1, having a molecular weight of 5,000,000 to 50,000,000 and 40 % by mass or less of an ultrahigh molecular weight component, P2, having a molecular weight of exceeding 50,000,000, and the relation between mass% of P1 and mass% of P2 is 1.5 × mass% of P1 ≥ mass% of P2, preferably mass% of P1 ≥ mass% of P2. In particular, the natural rubber contains preferably 20 % by mass or more of the high molecular weight component, P1, and 30 % by mass or less of the ultrahigh molecular weight component, P2, having a molecular weight of exceeding 50,000,000.

The natural rubber is provided with the above composition of the high molecular weight components, whereby the natural rubber maintains sufficient processability and is excellent in a breaking resistance and a wear resistance.

A measuring method for the high molecular weight components, P1 and P2, comprises a dissolving step of dissolving a natural rubber which is an analysis object in an organic solvent, a separating step of centrifuging the rubber solution at a centrifugal acceleration of 10,000 to 1,000,000 G to thereby separate a soluble component contained in the solution from an insoluble component and a measuring step of analyzing the soluble component obtained in the separating step to measure a molecular weight thereof by means of an equipment obtained by connecting an FFF equipment as a molecular weight fractionation equipment, a MALS detector as a molecular weight and branching detector or a single-angle light scattering detector such as LALLS, low angle laser light scattering, and RALLS, right angle laser light scattering, and a viscosity detector.

Any solvents may be available for the organic solvent to dissolve the natural rubber as long as the organic solvents can dissolve the natural rubber. To be specific, at least one kind selected from tetrahydrofuran (THF), chloroform, toluene and cyclohexane can be used alone or in a mixture. In the present invention, having a good solubility, THF is used.

An addition amount, dissolving amount, of the natural rubber in the organic solvent falls in a range of 0.001 to 1 % by mass in terms of a concentration of the natural rubber considering a diversity of the natural rubber.

In the dissolving step, the natural rubber is added to the organic solvent and then stored for 12 hours or longer to completely dissolve therein the natural rubber.

Centrifugal separation is a conventional separation technique, and a method of separation at a centrifugal acceleration of 10,000 to 1,000,000 G, so-called ultracentrifugal separation is used in the present invention. Only the soluble component containing the ultrahigh molecular weight component in the solution of the natural rubber can be obtained. It has become possible to analyze a natural rubber staying in a state in which an ultrahigh molecular weight component is contained therein, which has not so far been able to be analyzed.

In the separating step described above, the rubber solution is centrifuged for 10 to 300 minutes in a fixed range of a centrifugal acceleration of 10,000 to 1,000,000 G. The above makes it possible to separate the soluble component from the insoluble component in the solution. If the centrifugal acceleration is less than 10,000 G, the separation is insufficient. If the centrifugal acceleration exceeds 1,000,000 G, a problem is brought about on durability of the vessel.

Centrifugal separation can be carried out by means of an ultracentrifugal separator making it possible to cause a centrifugal part in vacuo and rotate a sample vessel at an ultrahigh speed.

The soluble component can be analyzed by means of an equipment obtained by connecting an FFF equipment as a molecular weight fractionation equipment, a MALS detector as a molecular weight and branching detector or a single-angle light scattering detector such as LALLS (low angle laser light scattering), and RALLS (right angle laser light scattering) and a viscosity detector.

FFF is a technique by which the molecular weights of components in a solution can be fractionated by a difference in a diffusion rate, and filtering a solution is not required unlike the conventional GPC analysis. In FFF, components in a solution are eluted in order of molecules having a lower molecular weight with a larger diffusion rate.

Accordingly, use of an FFF equipment in place of conventional GPC has made it possible to analyze a soluble component without carrying out filtering in a range containing an ultrahigh molecular weight component which has so far been excluded. Particularly an asymmetric flow FFF equipment is preferably used as the FFF equipment.

A molecular weight distribution of a soluble component is obtained according to Debye plotting by measuring the respective molecular components separated by FFF by means of an MALS detector.

A branch index has so far been expected to be determined in principle by using a method called GPC-MALS obtained by combining GPC with MALS, but in a case of a natural rubber, since a large amount of branched components having a long chain is contained therein, a function of fractionating toward molecular weights does not work well in GPC, and linear polymers having a low molecular weight and branched polymers having a high molecular weight are eluted at the same retention time due to an abnormal elution phenomenon, so that a branch index can not be measured over a wide molecular weight range. Accordingly, in a case of natural rubbers and rubbers containing a lot of branched components, a branch index is a structural factor which is not obtained by analysis using GPC-MALS.

In the natural rubber and the production process for a natural rubber according to the present invention, hereinafter referred to merely as "the present invention", the natural rubber is obtained by gelatinizing or multi-coupling a natural rubber or a natural rubber latex.

In a ribbed smoked sheet, RSS, according to grading in an international quality packaging standard, a common term, a green book, of various grade products of natural rubbers in conventional production of a natural rubber, a rubber component of a natural rubber latex obtained after tapping is coagulated, USS, with an acid and the like, and the solid rubber is separated from a water-soluble non-rubber component by means of a roll and dried, smoked, at about 60°C for 5 to 7 days. Also, in a technically specified rubber, TSR, a rubber component of a natural rubber latex after tapping is naturally coagulated, cup lump, and the solid rubber is crushed, washed with water and dehydrated. Then, the above solid rubber is subjected to hot air drying at 110 to 140°C for several hours.

In the present invention, a gelatinized or multi-coupled natural rubber is obtained by naturally coagulating a natural rubber latex immediately after tapping, but the natural rubber obtained by the following gelatinization or multi-coupling treatment is preferred.

In the present invention, preferred is a natural rubber obtained by coagulating a natural rubber latex with an acid and subjecting the coagulated rubber to dehydration treatment and/or controlling a water content thereof to 40 % by mass or less within 8 hours after addition of the acid to gelatinize or multi-couple the natural rubber at least for 72 hours or longer. The above dehydration treatment and/or gelatinization or multi-coupling treatment makes it possible to obtain the natural rubber containing 15 % by mass or more of a high molecular weight component, P1, having a molecular weight of 5,000,000 to 50,000,000 and 40 % by mass or less of an ultrahigh molecular weight component, P2, having a molecular weight of exceeding 50,000,000.

The coagulating acid may be either an organic acid or an inorganic acid, and such as formic acid and sulfuric acid can be listed as a representative example thereof. The acid is added to the latex for treatment so that a pH thereof is controlled in a range of pH 5.0 or less, and the pH falls in a range of particularly preferably 3.0 to 4.8.

The natural rubber latex is subjected to dehydration treatment and/or controlled to a water content falling in a range of 40 % by mass or less, preferably 30 to 5 % by mass within 8 hours, particularly 6 hours after adding the coagulating acid, and it is stored, or aged, at room temperature at least for 3 days, 72 hours, or longer while avoiding direct sunlight.

When the acid treatment and/or the dehydration treatment is too long and when a period, storing or ageing, for the gelatinization or the multi-coupling is too short, the natural rubber containing a large amount of a high molecular weight component, P1, cannot be obtained, and the natural rubber in which an ultrahigh molecular weight component, P2, is inhibited from increasing cannot be obtained.

Also, the natural rubber is stored preferably at a temperature of 5 to 60°C, more preferably room temperature while avoiding direct sunlight. The storing time is preferably within 40 days, and further longer gelatinization or multi-coupling is not preferred from an economical viewpoint. The natural rubber latex after stored is washed and dried by hot air to obtain the natural rubber. The hot air drying is carried out at a temperature of 60 to 140°C for suitable time.

In the present invention, preferred is the natural rubber obtained by addition of 16 parts by mass or more of a skim latex to 100 parts by mass of the natural rubber latex as solid to coagulate or multi-couple the natural rubber latex. The skim latex is added more preferably in a range of 20 to 100 parts by mass.

Addition of the skim latex for the gelatinization or multi-coupling treatment makes it possible to obtain the natural rubber containing 15 % by mass or more of a high molecular weight component, P1, having a molecular weight of 5,000,000 to 50,000,000 and 40 % by mass or less of an ultrahigh molecular weight component, P2, having a molecular weight of exceeding 50,000,000.

The skim latex is a by-product obtained by subjecting a natural rubber latex to centrifugal separation. In general, a rubber latex condensate is commercially produced from a field latex by a centrifugal separation step. After stabilizing the field latex, the field latex is continuously supplied to a centrifugal separator and separated into a flow of a latex condensate and a publicly known second flow of a skim latex. Usually, the condensate contains about 60 % by mass of a rubber, and the skim latex contains 3 to 6 % by mass of a rubber and other substances coming from the natural rubber latex.

In the present invention, preferred is the natural rubber obtained by addition of a cross-linking agent to a natural rubber latex or a natural rubber to gelatinize or multi-couple a natural rubber latex or a natural rubber.

The cross-linking agent may be added directly to the natural rubber latex and reacted therewith to multi-couple the natural rubber latex, or the cross-linking agent may be added to a natural rubber obtained by coagulating, washing and drying a natural rubber latex, and a mechanical shearing force is exerted thereon, that is, a natural rubber latex is blended, to thereby multi-couple a natural rubber latex.

For example, an equipment in which a mechanical shearing force can sufficiently be exerted is charged with a natural rubber raw material and a cross-linking compound to exert a mechanical shearing force on the natural rubber, whereby the natural rubber molecules can be cross-linked (coupling) and multi-coupled. The above makes it possible to cut one step and inhibit an excessive reduction in the molecular weight brought about by exerting a mechanical shearing force (blending).

The mechanical shearing force described above means a force applied to a solid natural rubber raw material when the solid natural rubber raw material is sheared and deformed in various kneading equipments.

An extent of the mechanical shearing force described above shall not specifically be restricted and can suitably be selected according to the purposes, and the shearing force is exerted preferably at a shearing speed falling in a range of preferably 10 to 10000 sec⁻¹, more preferably 50 to 3000 sec⁻¹.

If the shearing speed described above is less than 10 sec⁻¹, the mechanical shearing force is short, and the cross-linking reaction does not proceed sufficiently in a certain case. If the shearing speed exceeds 10000 sec⁻¹, a reduction in a molecular weight of the natural rubber molecules is expedited to deteriorate the heat generating property in a certain case. On the other hand, if the shearing speed described above falls in a more preferred range than described above, it is advantageous that in terms of the heat generating property from the viewpoint of a balance between a progress in the cross-linking reaction and a reduction in the molecular weight.

An equipment for exerting the mechanical shearing force described above shall not specifically be restricted and can suitably be selected according to the purposes, and the equipment includes, for example, such as a closed type double shaft mixer represented by a Bunbary mixer, a double shaft kneading equipment, and a dry prebreaker.

The cross-linking agent shall not specifically be restricted as long as the cross-linking agent is a compound having at least two functional groups reacting with rubber molecules, and the functional groups have preferably a multi-coupling reactivity and/or an addition reactivity with rubber molecules. A blend amount of the compound is preferably 0.01 to 3 parts by mass based on 100 parts by mass of the natural rubber latex (solid matter) or the natural rubber component.

If an addition amount of the cross-linking agent exceeds 3 parts by mass, the ultrahigh molecular weight component, P2, in the rubber is increased to exert an adverse effect on processability of the natural rubber. From the above viewpoint, the addition amount is 3 parts or less, preferably 2.5 parts or less and more preferably 2.2 parts or less. Also, if an addition amount of the cross-linking agent is less than 0.01 part by mass, the rubber cannot sufficiently be multi-coupled.

The cross-linking agent having a multi-coupling reactive functional group and/or an addition reactive functional group shall not be restricted in the present invention as long as the cross-linking agent causes the rubbers to be subjected to secondary or tertiary structural cross-linking between the rubbers. The multi-coupling reactive functional group includes, for example, such as a vinyl group, and the addition reactive functional group includes, for example, such as a hydrazide group and a thiol group. The functional group may be any combination of the above multi-coupling reactive functional groups and addition reactive functional groups. In particular, divinyl base compounds, dihydrazide base compounds and dithiol base compounds are preferred.

The divinyl base compounds have two vinyl groups and are reacted usually with double bonds in natural rubber molecules.

The cross-linking compounds having a multi-coupling reactive functional group such as the divinyl base compounds bring about problems such as bonding between the cross-linking compounds, other drafting depending on an amount of a multi-coupling initiator, and therefore they are likely to increase ultrahigh multi-coupling of the rubber. Accordingly, an addition amount of the multi-coupling initiator used is preferably 1.00 part by mass or less based on 100 parts by mass of the natural rubber component. In particular, the addition amount falls preferably in a range of 0.05 to 0.5 part by mass.

If an addition amount of the multi-coupling initiator exceeds 1.00 part by mass, the ultrahigh molecular weight component (P2) in the rubber is increased to exert an adverse effect on a processability of the natural rubber. Also, if an addition amount of the multi-coupling initiator is less than 0.05 part by mass, the rubber cannot sufficiently be multi-coupled.

The divinyl base compounds include compounds which have two vinyl groups or two groups containing a vinyl group (hereinafter referred to as Vn) and which are represented by a formula (Vn)₂R and compounds obtained by subjecting compounds having two or more vinyl groups or two or more groups containing a vinyl group to esterification with inorganic acids, compounds having two or more dibasic acids, compounds having two or more hydroxyl groups or compounds having two or more dibasic salts (an amino group or an amide group), and the divinyl base compounds can be represented by, for example, a formula: Vn-(O=)S-(O=)-Vn, a formula: Vn-O-(O=)C-R-C(O=)-O-Vn, a formula: Vn(O=)C-O-R-O-C(=O)Vn and a formula: Vn(O=)C-NH-R-NH-C(=O)Vn.

Vn is a vinyl group or a group containing a vinyl group and may be different from each other. R is an alkylene group such as methylene, ethylene, and propylene, a cycloalkylene group, a phenylene group, a naphthalene group or a carbon chain obtained by combining some of the above groups, and R is a carbon chain having 1 to 20 total carbon atoms. Also, R may be a carbon chain having oxygen, nitrogen, sulfur, a halogen element and/or a substituent containing the above elements in a carbon chain thereof as long as R is generally and practically manufactured and used.

The divinyl compound in which a vinyl group is directly substituted and bonded includes such as divinylbenzene and divinylnaphthalene.

Also, the compounds obtained by ester bonding of a vinyl group or vinyl compounds include such as divinylsulfone, divinyl oxalate, divinyl adipate, divinyl azelate, divinyl sebacate, divinyl eicosanedionate, divinyl dodecanoate, divinyl terephthalate, N,N'-methylenebisacrylamide, and N,N'-ethylenebisacrylamide.

The cross-linking agent having an addition reactive functional group includes such as diamino base compounds, dihydroxyl base compounds, dihydrazide base compounds, and dithiol base compounds, and they are subjected to nucleophilic or electrophilic reaction with a double bond, a carboxyl group and the like in the rubber molecules. From the viewpoint of a reactivity and the like, the dihydrazide base compounds and the dithiol base compounds are preferred.

The dihydrazide base compounds are represented by a formula H₂NNHC(=O)-R-C(=O)-NHNH₂. R is an alkylene group such as methylene, ethylene, and propylene, a cycloalkylene group, a phenylene group, a naphthalene group or a carbon chain obtained by combining some of the above groups, and R is a carbon chain having 1 to 20 carbon atoms. Also, R may be a carbon chain having oxygen, nitrogen, sulfur, a halogen element and/or a substituent containing the above elements in a carbon chain thereof as long as R is generally and practically manufactured and used.

The specific dihydrazide compound includes, for example, such as phthalic dihydrazide, isophthalic dihydrazide, terephthalic dihydrazide, 1,3-bis(hydrazinocarboethyl)-5-isopropylhydanntoin, succinic dihydrazide, adipic dihydrazide, azelaic dihydrazide, sebacic dihydrazide, eicosanedioic dihydrazide, dodecanoic dihydrazide, 7,11-octadecadiene-1,18-dicarbohydrazide, and oxalic dihydrazide.

The dithiol base compounds are compounds which have two thiol groups or two groups containing a thiol group (hereinafter shown by SH) and which are represented by a formula R(SH)₂ and have a high dispersibility into the rubber.

SH is a thiol group or a group containing a thiol group and may be different from each other. R is an alkylene group such as methylene, ethylene, and propylene, a cycloalkylene group, a phenylene group, a naphthalene group or a carbon chain obtained by combining some of the above groups, and R is a carbon chain having 1 to 20 total carbon atoms. Also, R may be a carbon chain having oxygen, nitrogen, sulfur, a halogen element and/or a substituent containing the above elements in a carbon chain thereof as long as R is generally and practically manufactured and used.

The specific dithiol base compound includes such as 2,3-dithiol-1-propanol, ethylenebis(thiol acetate), meso-2,3-dithiolsuccinic acid, and bis(2-thiolethyl) ether.

The rubber composition of the present invention is prepared by blending the rubber component containing the natural rubber described above. The natural rubber described above is contained in the rubber component in the rubber composition of the present invention, and in addition thereto, a conventional natural rubber and various synthetic rubbers can be contained therein. A diene base synthetic rubber is preferably used from the viewpoint of a polymer compatibility or homogeneous dispersibility.

The diene base synthetic rubber which can be used includes, for example, at least one selected from isoprene rubbers, styrene-butadiene copolymer rubbers, butadiene rubbers and styrene-isoprene copolymer rubbers, and particularly at least one selected form isoprene rubbers, styrene-butadiene copolymer rubbers and butadiene rubbers is preferred from the viewpoint of a heat resistance. In the rubber composition of the present invention, a content of the natural rubber obtained above is 5 % by mass or more, preferably 50 % by mass or more based on a total amount of the whole rubber components. If a content of the above natural rubber is less than 5 % by mass, the effects of the natural rubber described above are not sufficiently exerted.

The rubber composition of the present invention can be blended with fillers such as carbon black, and silica, blending agents usually used in the rubber industrial field, for example, such as softening agents, silane coupling agents, stearic acid, zinc oxide, vulcanization accelerators, and vulcanizing agents which are suitably selected as long as the effects of the present invention are not damaged. Commercially available products can suitably be used for the above blending agents.

The rubber composition of the present invention can be produced by blending the natural rubber described above with, if necessary, various blending agents which are suitably selected, kneading, warming, extruding and the like.

The rubber composition of the present invention thus constituted is stabilized in a quality, and the rubber composition which is excellent in a breaking resistance and a wear resistance is obtained.

Next, the tire of the present invention is characterized by using the rubber composition described above for any of tire members. In the present connection, the tire members are preferably a tire tread and a side wall of a pneumatic tire. In a tire prepared by using the rubber composition described above for a tire tread, the natural rubber in which a viscosity and a molecular weight are optimized ranges can be used as a rubber component, and therefore durability of the tire tread can be maintained over a long period of time. The tire of the present invention is not specifically restricted except that the rubber composition described above is used for any of the tire members thereof, and the tire can be produced according to conventional methods.

### EXAMPLES

The present invention shall be explained below in a more specific and detailed manner with reference to examples and comparative examples, but the present invention shall not be restricted to the following examples.

Natural rubbers shown in the following examples and comparative examples were produced, and the respective natural rubbers produced were used to prepare rubber compositions by adding the respective blending agents shown in the following Table 1. The physical properties of the rubber compositions were evaluated by the following respective evaluation methods.

**Table 1**

| Rubber composition | Parts by mass |
|---|---|
| Natural rubber | 100 |
| Carbon black (N339) | 50 |
| Aromatic oil | 5 |
| Stearic acid | 2 |
| Anti-aging agent | 1 |
| Zinc oxide | 3 |
| Vulcanization accelerator CZ^{*1} | 0.8 |
| Sulfur | 1 |

| | |
|---|---|
| *1: CZ, N-Cyclohexyl-2-benzothiazylsulfenamide | |

### Evaluation method:

### (1) Measurement of a high molecular weight component, P1, and an ultrahigh molecular weight component, P2:

The sample of the natural rubber was added to THF so that a concentration of the natural rubber in the solution was 0.4 % by mass. After stored for 24 hours, the above solution was subjected to ultracentrifugal separation at a centrifugal acceleration of about 150,000 G for 1 hour using a stainless steel-made centrifuge tube to separate a soluble component from an insoluble component in the solution.

A supernatant liquid corresponding to the soluble component in the separated solution was obtained and diluted to twice by THF, and the solution was measured and analyzed by means of FFF-MALS. Used respectively were AF2000 manufactured by Postnova Gmbh as an FFF equipment, Dawn Heleos II manufactured by Wyatt Technology Corporation as an MALS detector and Model PN3140 manufactured by Postnova Gmbh as an RI detector. In the present case, the instruments were connected in order of the FFF equipment-the MALS detector-the RI detector.

### (2) Evaluation of physical properties of rubber composition: measuring method of a Mooney viscosity after blending:

A Mooney viscosity of the rubber composition at 130°C was measured according to JIS K 6300-1: 2001. A Mooney viscosity of the rubber composition in Comparative Example 1 was set to an index of 100, and those of the other cases were shown by an index. The higher the value is, the worse processability of the rubber composition is.

### (3) Evaluation of physical properties of rubber composition: Tensile at break, Tb:

An elasticity of the rubber composition in breaking was measured at room temperature according to JIS K 6301. It is shown that the larger the value is, the better the breaking resistance is. An elasticity of the rubber composition in Comparative Example 1 was set to an index of 100, and elasticity values of the other cases were shown by an index.

### (4) Evaluation of physical properties of rubber composition: wear resistance:

A Lambourn type wear tester was used to measure a wear amount at a slip ratio of 25 % at room temperature, and an inverse number thereof was shown by an index, wherein a wear amount of the rubber composition in Comparative Example 1 was set to 100. The larger the value is, the better the wear resistance is.

First, rubber compositions were produced in Examples 1 to 11 and Comparative Examples 1 to 2.

### Example 1

A stainless steel-made reaction vessel equipped with a stirrer and a temperature controlling jacket was charged with 2000 g of a field latex containing 600 g of solid matter, and an emulsion prior prepared by addition of 100 mg of an emulsifier, Emulgen 1108, manufactured by Kao Corporation, dissolved in 20 ml of water to 3.0 g of divinylbenzene was added to the field latex together with 280 ml of water. The above mixture was stirred at room temperature for 30 minutes while deoxygenating with nitrogen bubbling.

Next, 1.0 g of tert-butyl hydroperoxide, t-BHPO, as a multi-coupling initiator and 1.0 g of tetraethylenepentaamine, TEPA, as an emulsion stabilizer were added thereto to react them at 40°C for 1 hour, whereby a multi-coupled natural rubber latex was obtained.

Formic acid was added to the natural rubber latex thus obtained to control a pH thereof to 4.7, whereby the natural rubber latex was coagulated. The solid matter thus obtained was treated five times by means of a scraper and then caused to pass through a shredder and crumbed. Then, the solid matter was dried at 110°C for 210 minutes by means of a hot air dryer to obtain a natural rubber A. The natural rubber A was used to prepare a rubber composition according to a composition shown in Table 1 described above.

An amount of divinylbenzene is 0.5 part by mass (3/6 = 0.5) per 100 parts by mass of the rubber, and the amount of the multi-coupling initiator is 0.17 part by mass (1/6 = 0.17).

### Example 2

Production was carried out on the same conditions, thereby to obtain a natural rubber B, except that in Example 1, 14.4 g of divinylbenzene was added in place of 3.0 g of divinylbenzene. A rubber composition was obtained according to a composition shown in Table 1 described above.

### Example 3

Production was carried out on the same conditions, thereby to obtain a natural rubber C, except that in Example 1, 12.0 g of divinylbenzene was added in place of 3.0 g of divinylbenzene. A rubber composition was obtained according to a composition shown in Table 1 described above.

### Example 4

Production was carried out on the same conditions, thereby to obtain a natural rubber D, except that in Example 1, 6.0 g of divinylbenzene was added in place of 3.0 g of divinylbenzene. A rubber composition was obtained according to a composition shown in Table 1 described above.

### Example 5

Production was carried out on the same conditions, thereby to obtain a natural rubber E, except that in Example 1, 3.0 g of divinyladipate was added in place of 3.0 g of divinylbenzene. A rubber composition was obtained according to a composition shown in Table 1 described above.

### Example 6

Production was carried out on the same conditions, thereby to obtain a natural rubber F, except that in Example 1, 3.0 g of N,N'-methylenebisacrylamide was added in place of 3.0 g of divinylbenzene. A rubber composition was obtained according to a composition shown in Table 1 described above.

### Example 7

Formic acid was added to a field latex to control a pH thereof to 4.7, whereby the field latex was coagulated. The above solid matter was treated five times by means of a scraper and then caused to pass through a shredder and crumbed. The above coagulated matter was dried at 110°C for 210 minutes by means of a hot air dryer to obtain 600 g of a dried rubber, and the dried rubber was kneaded together with 3.0 g of adipic dihydrazide at 90°C for 90 seconds by means of a plastomill manufactured by Toyo Seiki Seisaku-sho, Ltd. to thereby obtain a natural rubber G.

An amount of adipic dihydrazide is 0.5 part by mass (3/6 - 0.5) per 100 parts by mass of the rubber.

### Example 8

Production was carried out on the same conditions, thereby to obtain a natural rubber H, except that in Example 7, 3.0 g of 2,3-dithiol-1-propanol was added in place of 3.0 g of adipic dihydrazide. A rubber composition was obtained according to a composition shown in Table 1 described above.

### Example 9

Production was carried out on the same conditions, thereby to obtain a natural rubber I, except that in Example 7, 3.0 g of 2,3-dithiolsuccinic acid was added in place of 3.0 g of adipic dihydrazide. A rubber composition was obtained according to a composition shown in Table 1 described above.

### Example 10

Production was carried out on the same conditions, thereby to obtain a natural rubber J, except that in Example 7, 3.0 g of ethylenebis(thiol acetate) was added in place of 3.0 g of adipic dihydrazide. A rubber composition was obtained according to a composition shown in Table 1 described above.

### Example 11

Production was carried out on the same conditions, thereby to obtain a natural rubber K, except that in Example 7, 3.0 g of bis(2-thiolethyl) ether was added in place of 3.0 g of adipic dihydrazide. A rubber composition was obtained according to a composition shown in Table 1 described above.

### Comparative Example 1

Formic acid was added to a field latex to control a pH thereof to 4.7, whereby the natural rubber latex was coagulated (conventionally coagulated). The solid matter thus obtained was treated five times by means of a scraper and then caused to pass through a shredder and crumbed. Then, the solid matter was dried (conventionally dried) at 130°C for 120 minutes by means of a hot air dryer to obtain a natural rubber 1. A rubber composition was obtained according to a composition shown in Table 1 described above.

### Comparative Example 2

Production was carried out on the same conditions to, thereby obtain a natural rubber 2, except that in Example 1, 20 g of divinylbenzene was added in place of 3.0 g of divinylbenzene. A rubber composition was obtained according to a composition shown in Table 1 described above.

Shown in the following Table 2 were the polymer compositions of the natural rubbers produced in Examples 1 to 11 and Comparative Examples 1 to 2 and the physical properties of the respective rubber compositions produced by using the above natural rubbers.

**Table 2**

| | Examples | | | | | | | | | | | Comparative Examples | |
|---|---|---|---|---|---|---|---|---|---|---|---|---|---|
| | 1 | 2 | 3 | 4 | 5 | 6 | 7 | 8 | 9 | 10 | 11 | 1 | 2 |
| Natural rubber | A | B | C | D | E | F | G | H | I | J | K | 1 | 2 |
| Cross-linking agent | i | | | | | ii | iii | iv | v | vi | vii | - | i |
| Addition mass (g) | 3 | 14.4 | 12 | 6 | 3 | 3 | 3 | 3 | 3 | 3 | 3 | 0 | 20 |
| Ratio (phr) | 0.5 | 2.4 | 2.0 | 1.0 | 0.5 | 0.5 | 0.5 | 0.5 | 0.5 | 0.5 | 0.5 | 0.0 | 3.3 |
| Reaction Condition | P | | | | | | K | | | | | | P |
| Mass ratio of P1 (%) Mw: 5 to 50 millions | 28 | 36 | 35 | 32 | 25 | 27 | 22 | 24 | 20 | 22 | 23 | 8 | 16 |
| Mass ratio of P2 (%) Mw: > 50 millions | 27 | 36 | 34 | 31 | 24 | 27 | 22 | 24 | 18 | 20 | 21 | 10 | 54 |

| | Physical property evaluation of the rubber composition (shown by index) | | | | | | | | | | | | |
|---|---|---|---|---|---|---|---|---|---|---|---|---|---|
| Tb | 120 | 126 | 124 | 123 | 118 | 120 | 114 | 116 | 110 | 112 | 114 | 100 | 85 |
| Wear resistance property | 115 | 120 | 119 | 117 | 115 | 116 | 112 | 113 | 109 | 110 | 111 | 100 | 80 |
| Moorney Viscosity at 130 °C | 112 | 116 | 114 | 112 | 110 | 111 | 105 | 108 | 103 | 105 | 106 | 100 | 140 |

| | | | | | | | | | | | | | |
|---|---|---|---|---|---|---|---|---|---|---|---|---|---|
| Cross-linking agent i) divinyl benzene, ii) N,N'-methylene-bis(acryl-amide), iii) adipoyl-dihydrazide, iv) 2,3-dithiol-1-propanol, v) 2,3-dithiol-succinic-acid, vi) ethylen-bis(thioacetate), vii) bis(2-thiolethyl)-ether Reaction Condition: P; by multi-coupling, K; kneading | | | | | | | | | | | | | |

Referring to the results shown in Table 2 described above, in the natural rubbers produced in Examples 1 to 11, the high molecular weight component, P1, having a molecular weight of 5,000,000 to 50,000,000 accounted for 15 % by mass or more. Also, the ultrahigh molecular weight component, P2, having a molecular weight of exceeding 50,000,000 accounted for 40 % by mass or less. In addition, the relation between mass% of P1 and mass% of P2 is 1.5 × mass% of P1 ≥ mass% of P2. The natural rubber produced in Comparative Example 1 does not satisfy the ratio of the high molecular weight component, P1, and the ultrahigh molecular weight component, P2, prescribed in the present invention, and the natural rubbers produced in Examples 1 to 11 satisfy the ratios thereof.

Also, the natural rubber produced in Comparative Example 2 does not satisfy as well the ratios of the high molecular weight component, P1, and the ultrahigh molecular weight component, P2, each prescribed in the present invention, and when an addition amount of the cross-linking agent was too large, the ultrahigh molecular weight component, P2, was observed to be increased. The natural rubber produced in Comparative Example 2 has a high Mooney viscosity and is deteriorated in processability as compared with the natural rubbers produced in Examples 1 to 11, and it is not observed to be improved in a wear resistance and Tb (breaking resistance).

Next, natural rubbers were produced in Examples 12 to 17 and Comparative Examples 3 to 6.

### Example 12

Formic acid was added to a natural rubber latex to coagulate the natural rubber latex, and the solid rubber was subjected to mechanical dehydration operation within 6 hours after coagulated so that a water content thereof was 40 % by mass or less. Then, the coagulated rubber which was controlled to a water content of 40 % by mass or less was stored or aged for 3 days in a place which was not exposed to direct sunlight, and then the coagulated rubber was washed and subjected to hot air drying at 130°C for 2 hours to obtain a natural rubber a. A rubber composition was obtained according to a composition shown in Table 1 described above.

### Example 13

Formic acid was added to a natural rubber latex to coagulate the natural rubber latex, and the solid rubber was subjected to mechanical dehydration operation within 6 hours after coagulated so that a water content thereof was 40 % by mass or less. Then, the coagulated rubber which was controlled to a water content of 40 % by mass or less was stored or aged for 7 days in a place which was not exposed to direct sunlight, and then the coagulated rubber was washed and subjected to hot air drying at 130°C for 2 hours to obtain a natural rubber b. A rubber composition was obtained according to a composition shown in Table 1 described above.

### Example 14

Formic acid was added to a natural rubber latex to coagulate the natural rubber latex, and the solid rubber was subjected to mechanical dehydration operation within 6 hours after coagulated so that a water content thereof was 40 % by mass or less. Then, the coagulated rubber which was controlled to a water content of 40 % by mass or less was stored or aged for 35 days in a place which was not exposed to direct sunlight, and then the coagulated rubber was washed and subjected to hot air drying at 130°C for 2 hours to obtain a natural rubber c. A rubber composition was obtained according to a composition shown in Table 1 described above.

### Example 15

Formic acid was added to a natural rubber latex to coagulate the natural rubber latex, and the solid rubber was subjected to mechanical dehydration operation within 6 hours after coagulated so that a water content thereof was 40 % by mass or less. Then, the coagulated rubber which was controlled to a water content of 40 % by mass or less was stored or aged for 35 days in a place which was not exposed to direct sunlight, and then the coagulated rubber was washed and subjected to hot air drying at 80°C for 24 hours to obtain a natural rubber d. A rubber composition was obtained according to a composition shown in Table 1 described above.

### Example 16

A skim latex 25 parts by mass as solid was added to a natural rubber latex 100 parts by mass as solid, and the mixture was coagulated with formic acid. The coagulated rubber was washed and then subjected to hot air drying at 130°C for 2 hours to obtain a natural rubber sample e. A rubber composition was obtained according to a composition shown in Table 1 described above.

### Example 17

A skim latex 50 parts by mass as solid was added to a natural rubber latex 100 parts by mass as solid, and the mixture was coagulated with formic acid. The coagulated rubber was washed and then subjected to hot air drying at 130°C for 2 hours to obtain a natural rubber f. A rubber composition was obtained according to a composition shown in Table 1 described above.

### Comparative Example 3

A natural rubber latex was coagulated with formic acid, and the coagulated rubber was washed and then subjected to hot air drying at 80°C for 24 hours to obtain a comparative natural rubber 3. A rubber composition was obtained according to a composition shown in Table 1 described above.

### Comparative Example 4

The natural rubber produced in Comparative Example 3 was stored at 60°C for 7 days to prepare a natural rubber 4. A rubber composition was obtained according to a composition shown in Table 1 described above.

### Comparative Example 5

Formic acid was added to a natural rubber latex to coagulate the natural rubber latex, and the solid rubber was subjected to mechanical dehydration operation within 6 hours after coagulated so that a water content thereof was 40 % by mass or less. Then, the coagulated rubber which was controlled to a water content of 40 % by mass or less was stored or aged for 1 day in a place which was not exposed to direct sunlight, and then the coagulated rubber was washed and subjected to hot air drying at 130°C for 2 hours to obtain a comparative natural rubber 5. A rubber composition was obtained according to a composition shown in Table 1 described above.

### Comparative Example 6

Formic acid was added to a natural rubber latex to coagulate the natural rubber latex, and then the coagulated rubber was not subjected to mechanical dehydration operation and was stored or aged for 35 days in a place which was not exposed to direct sunlight. Then, the coagulated rubber was washed and subjected to hot air drying at 130°C for 2 hours to obtain a comparative natural rubber 6. A rubber composition was obtained according to a composition shown in Table 1 described above.

Shown in the following Table 3 were the polymer compositions of the natural rubbers produced in Examples 12 to 17 and Comparative Examples 3 to 6 and the physical properties of the respective rubber compositions produced by using the above natural rubbers.

**Table 3**

| | Example | | | | | | Comparative Example | | | |
|---|---|---|---|---|---|---|---|---|---|---|
| | 12 | 13 | 14 | 15 | 16 | 17 | 3 | 4 | 5 | 6 |
| Natural rubber | a | b | c | d | e | f | 3 | 4 | 5 | 6 |
| Mass ratio of P1 (%) Mw: 5 to 50 millions | 21 | 23 | 25 | 35 | 15 | 19 | 10 | 12 | 10 | 8 |
| Mass ratio of P2 (%) Mw: > 50 millions | 7 | 10 | 15 | 18 | 10 | 18 | 20 | 40 | 15 | 16 |

| | Physical property evaluation of the rubber composition (shown by index) | | | | | | | | | |
|---|---|---|---|---|---|---|---|---|---|---|
| Tb | 112 | 119 | 120 | 122 | 105 | 109 | 95 | 90 | 92 | 88 |
| Wear resistance property | 113 | 115 | 114 | 117 | 104 | 108 | 98 | 92 | 99 | 85 |
| Moorney viscosity at 130°C | 110 | 117 | 118 | 130 | 110 | 115 | 127 | 138 | 95 | 92 |

Referring to the results shown in Table 3 described above, in the natural rubbers produced in Examples 12 to 17, the high molecular weight component, P1, having a molecular weight of 5,000,000 to 50,000,000 accounted for 15 % by mass or more. Also, the ultrahigh molecular weight component, P2, having a molecular weight of exceeding 50,000,000 accounted for 40 % by mass or less. The natural rubbers produced in Comparative Examples 3 to 4 do not satisfy, as is the case with Comparative Example 1, the ratios of the high molecular weight component, P1, and the ultrahigh molecular weight component, P2, each prescribed in the present invention, and the natural rubbers produced in Examples 12 to 17 satisfy the ratios thereof.

In Comparative Example 3, when constant low temperature drying is carried out, gelation is observed. However, most of the gelation leads to an increase in the ultrahigh molecular weight component. Also, it has been found in Comparative Example 4 that when a conventional natural rubber is stored at low temperature after the drying, a definite gelation is also observed, however, most of the gelation leads also to an increase in the ultrahigh molecular weight component. In Comparative Example 5, the mechanical dehydration step and the ageing step are carried out, however time therefor is not sufficiently long, and as a result thereof, the high molecular weight component is not sufficiently increased. Also, in Comparative Example 6, the mechanical dehydration step is not carried out, and the ageing step is carried out, which results in no increase in the high molecular weight component.

It can be found that the rubber compositions prepared in Comparative Examples 3 to 6 are inferior in processability, a wear resistance and a breaking resistance as compared with conventional products. On the other hand, it can be found that in Examples 12 to 17, processability stays in a state in which it is maintained relatively well and that the wear resistance and the breaking resistance are excellent.

### Industrial Applicability

The natural rubbers according to the present invention are excellent in processability, a wear resistance and a breaking resistance and have a high industrial applicability.

## Claims

1. A natural rubber which is a natural rubber latex or a natural rubber,
**characterized by** comprising:
15 % by mass or more of a high molecular weight component, P1, having a molecular weight of 5,000,000 to 50,000,000 and
40 % by mass or less of an ultrahigh molecular weight component, P2, having a molecular weight of exceeding 50,000,000, and
the relation between mass% of P1 and mass% of P2 is 1.5 × mass% of P1 ≥ mass% of P2,
each measured by the following measuring method, wherein a measuring method for a rubber molecular weight is measured by means of a field flow fractionation equipment with a multi-angle light scattering detector for a soluble part of a centrifuged rubber solution at a centrifugal acceleration of 10,000 to 1,000,000 G.

2. The natural rubber as described in claim 1, wherein the relation between mass% of P1 and mass% of P2 is mass% of P1 ≥ mass% of P2.

3. The natural rubber as described in claim 1 or 2, wherein 20% by mass or more of P1 is contained.

4. The natural rubber as described in any one of claims 1 to 3, wherein the natural rubber is obtained by gelatinizing or multi-coupling a natural rubber latex or a natural rubber.

5. The natural rubber as described in any one of claims 1 to 4, wherein the natural rubber is obtained by adding 16 parts by mass or more of a skim latex as solid to 100 parts by mass of the natural rubber latex as solid.

6. The natural rubber as described in any one of claims 1 to 4, wherein the natural rubber is obtained by controlling a water content thereof to 40 % by mass or less and holding it at least for 72 hours or longer.

7. The natural rubber as described in claim 6, wherein a natural rubber latex is coagulated with an acid coagulating agent, and the coagulated rubber is subjected to dehydration treatment within 8 hours after adding the acid coagulating agent.

8. The natural rubber as described in any one of claims 1 to 4, wherein the natural rubber is obtained by adding 0.01 to 3 parts by mass of a cross-linking agent having a functional group which is multi-coupling and/or addition reactable to 100 parts by mass of a natural rubber latex as solid or a natural rubber.

9. The natural rubber as described in claim 8, wherein the cross-linking agent is at least one selected from a group consisting of divinyl-, dihydrazide-, and dithiol-type compounds.

10. A rubber composition containing the natural rubber as described in any one of claims 1 to 9.

11. A tire prepared by using the rubber composition as described in claim 10.

12. A production process for a natural rubber,
**characterized by** comprising:
controlling a water content of a natural rubber latex or a natural rubber to 40 % by mass or less and
holding the natural rubber latex or a natural rubber at least for 72 hours or longer
to thereby produce a natural rubber comprising:
15 % by mass or more of a high molecular weight component, P1, having a molecular weight of 5,000,000 to 50,000,000 and
40 % by mass or less of an ultrahigh molecular weight component, P2, having a molecular weight of exceeding 50,000,000, and
the relation between mass% of P1 and mass% of P2 is 1.5 × mass% of P1 ≥ mass% of P2,
each measured by the following measuring method, wherein a measuring method for a rubber molecular weight is measured by means of a field flow fractionation equipment with a multi-angle light scattering detector for a soluble part of a centrifuged rubber solution at a centrifugal acceleration of 10,000 to 1,000,000 G.

13. The production process for a natural rubber as described in claim 12, wherein a natural rubber latex is coagulated with an acid coagulating agent, and the coagulated rubber is subjected to dehydration treatment within 8 hours after adding the acid coagulating agent.

14. The production process for a natural rubber as described in claim 12, wherein the natural rubber is obtained by adding 16 parts by mass or more of a skim latex as solid to 100 parts by mass of the natural rubber latex as solid.

15. The production process for a natural rubber as described in claim 12, **characterized in that** the natural rubber is obtained by adding 0.01 to 3 parts by mass of a cross-linking agent having a functional group, which is multi-coupling and/or addition reactable, to 100 parts by mass of a natural rubber latex as solid or a natural rubber.

16. The production process for a natural rubber as described in claim 15, wherein the cross-linking agent is at least one selected from a group consisting of divinyl-, dihydrazide-, and dithiol-type compounds.

17. The production process for a natural rubber as described in claim 15, **characterized in that** a mechanical shearing force is exerted at a shearing speed falling in a range of 10 to 10, 000 sec⁻¹.

## Patentansprüche

1. Naturkautschuk, bestehend aus einem Naturkautschuklatex oder einem Naturkautschuk,
**dadurch gekennzeichnet, dass** er Folgendes beinhaltet:
15 Gewichtsprozent oder darüber einer Komponente mit hohem Molekulargewicht, P1, welche ein Molekulargewicht zwischen 5.000.000 und 50.000.000 aufweist, und
40 Gewichtsprozent oder darunter einer Komponente mit ultrahohem Molekulargewicht, P2, welche ein Molekulargewicht von über 50.000.000 aufweist, und
wobei das Verhältnis zwischen Gewichtsprozent von P1 und von P2 1.5 x Gewichtsprozent von P1 ≥ Gewichtsprozent von P2 beträgt,
wobei beide anhand folgenden Messverfahrens gemessen werden, wobei ein Messverfahren für Kautschukmolekulargewicht mit Hilfe eines Feld-Fluss-Fraktionierungsgerätes mit einem Mehrwinkel-Laser-Lichtstreudetektor an einem löslichen Anteil einer mit einer Zentrifugalbeschleunigung von 10.000 bis 1.000.000 G zentrifugierten Kautschuklösung gemessen wird.

2. Naturkautschuk nach Anspruch 1, bei welchem das Verhältnis zwischen Gewichtsprozent von P1 und Gewichtsprozent von P2 Gewichtsprozent von P1 ≥ Gewichtsprozent von P2 beträgt.

3. Naturkautschuk nach Anspruch 1 oder 2, welcher 20 Gewichtsprozent oder darüber von P1 enthält.

4. Naturkautschuk nach einem der Ansprüche 1 bis 3, bei welchem der Naturkautschuk durch Gelieren oder Mehrfachbindung eines Naturkautschuklatex oder eines Naturkautschuks erzeugt wird.

5. Naturkautschuk nach einem der Ansprüche 1 bis 4, bei welchem der Naturkautschuk durch Zugabe von 16 Gewichtsanteilen oder darüber eines abgeschöpften Latex als Feststoff zu 100 Gewichtsanteilen des Naturkautschuklatex als Feststoff erzeugt wird.

6. Naturkautschuk nach einem der Ansprüche 1 bis 4, bei welchem der Naturkautschuk durch Steuerung eines Wassergehaltes davon auf 40 % Gewichtsprozent oder darunter und Halten dieses Gehaltes über 72 Stunden oder länger erzeugt wird.

7. Naturkautschuk nach Anspruch 6, bei welchem ein Naturkautschuklatex mit einem sauren Koagulationsmittel koaguliert wird, und der koagulierte Kautschuk innerhalb von 8 Stunden nach Zugabe des sauren Koagulationsmittels einer Dehydrierungsbehandlung unterzogen wird.

8. Naturkautschuk nach einem der Ansprüche 1 bis 4, bei welchem der Naturkautschuk durch Zugabe von 0,01 bis 3 Gewichtsanteilen eines Vernetzungsmittels, welches eine Mehrfachbindungs-Funktionsgruppe und/oder eine bei Zugabe reagierbare Funktionsgruppe enthält, zu 100 Gewichtsanteilen eines Naturkautschuklatex als Feststoff oder eines Naturkautschuks erzeugt wird.

9. Naturkautschuk nach Anspruch 8, bei welchem das Vernetzungsmittel mindestens eines der Elemente, gewählt aus einer Gruppe, bestehend aus Verbindungen vom Typ Divinyl-, Dihydrazid-, und Dithiolverbindungen, ist.

10. Kautschukzusammensetzung, beinhaltend den Naturkautschuk nach einem der Ansprüche 1 bis 9.

11. Reifen, vorbereitet unter Verwendung der Kautschukzusammensetzung nach Anspruch 10.

12. Verfahren zur Herstellung von Naturkautschuk, **dadurch gekennzeichnet, dass** es Folgendes beinhaltet:
Steuern eines Wassergehaltes eines Naturkautschuklatex oder eines Naturkautschuks auf 40 Gwichtsprozent oder darunter, und
Halten des Naturkautschuklatex oder des Naturkautschuks über mindestens 72 Stunden oder länger
zur Herstellung eines Naturkautschuks hierdurch, Folgendes beinhaltend:
15 Gewichtsprozent oder darüber einer Komponente mit hohem Molekulargewicht, P1, welche ein Molekulargewicht zwischen 5.000.000 und 50.000.000 aufweist, und
40 Gewichtsprozent oder darunter einer Komponente mit ultrahohem Molekulargewicht, P2, welche ein Molekulargewicht von über 50.000.000 aufweist, und wobei das Verhältnis zwischen Gewichtsprozent von P1 und Gewichtsprozent von P2 1.5 x Gewichtsprozent von P1 ≥ Gewichtsprozent von P2 beträgt,
wobei beide anhand folgenden Messverfahrens gemessen werden, wobei ein Messverfahren für Kautschukmolekulargewicht mit Hilfe eines Feld-Fluss-Fraktionierungsgerätes mit einem Mehrwinkel-Laser-Lichtstreudetektor an einem löslichen Anteil einer mit einer Zentrifugalbeschleunigung von 10.000 bis 1.000.000 G zentrifugierten Kautschuklösung gemessen wird.

13. Herstellungsverfahren eines Naturkautschuks nach Anspruch 12, bei welchem ein Naturkautschuklatex mit einem sauren Koagulationsmittel koaguliert wird, und der koagulierte Kautschuk innerhalb von 8 Stunden nach Zugabe des sauren Koagulationsmittels einer Dehydrierungsbehandlung unterzogen wird.

14. Herstellungsverfahren eines Naturkautschuks nach Anspruch 12, bei welchem der Naturkautschuk durch Zugabe von 16 Gewichtsanteilen oder darüber eines abgeschöpften Latex als Feststoff zu 100 Gewichtsanteilen des Naturkautschuklatex als Feststoff erzeugt wird.

15. Herstellungsverfahren eines Naturkautschuks nach Anspruch 12, **dadurch gekennzeichnet, dass** der Naturkautschuk durch Zugabe von 0,01 bis 3 Gewichtsanteilen eines Vernetzungsmittels, welches eine Mehrfachbindungs-Funktionsgruppe und/oder eine bei Zugabe reagierbare Funktionsgruppe enthält, zu 100 Gewichtsanteilen eines Naturkautschuklatex als Feststoff oder eines Naturkautschuks erzeugt wird.

16. Herstellungsverfahren eines Naturkautschuks nach Anspruch 15, bei welchem das Vernetzungsmittel mindestens eines der Elemente, gewählt aus einer Gruppe, bestehend aus Verbindungen vom Typ Divinyl-, Dihydrazid-, und Dithiolverbindungen, ist.

17. Herstellungsverfahren eines Naturkautschuks nach Anspruch 15, **dadurch gekennzeichnet, dass** eine mechanische Scherkraft bei einer Schergeschwindigkeit in einem Bereich von 10 bis 10.000 Sek.⁻¹ ausgeübt wird.

## Revendications

1. Caoutchouc naturel qui est un latex de caoutchouc naturel ou un caoutchouc naturel, **caractérisé en ce qu'**il comprend :
15% en masse ou plus d'un composant de poids moléculaire élevé, soit P1, présentant un poids moléculaire de 5 000 000 à 50 000 000 ; et
40% en masse ou moins d'un composant de poids moléculaire ultraléger, soit P2, présentant un poids moléculaire excédant 50 000 000 ; et
la relation entre le % en masse de P1 et le % en masse de P2 est
1,5 x % en masse de P1 ≥ % en masse de P2,
chacun étant mesuré au moyen du procédé de mesure qui suit, dans lequel un procédé de mesure pour un poids moléculaire de caoutchouc est mesuré au moyen d'un équipement de fractionnement par couplage flux-force avec un détecteur de diffusion de la lumière multi-angle pour une partie soluble d'une solution de caoutchouc centrifugée à une accélération centrifuge de 10 000 à 1 000 000 G.

2. Caoutchouc naturel comme décrit dans la revendication 1, dans lequel la relation entre le % en masse de P1 et le % en masse de P2 est :
% en masse de P1 ≥ % en masse de P2.

3. Caoutchouc naturel comme décrit dans la revendication 1 ou 2, dans lequel 20% en masse ou plus de P1 sont contenus.

4. Caoutchouc naturel comme décrit dans l'une quelconque des revendications 1 à 3, dans lequel le caoutchouc naturel est obtenu par gélatinisation ou multi-couplage d'un latex de caoutchouc naturel ou d'un caoutchouc naturel.

5. Caoutchouc naturel comme décrit dans l'une quelconque des revendications 1 à 4, dans lequel le caoutchouc naturel est obtenu par ajout de 16 parties en masse ou plus d'un latex écrémé en tant que solide à 100 parties en masse du latex de caoutchouc naturel en tant que solide.

6. Caoutchouc naturel comme décrit dans l'une quelconque des revendications 1 à 4, dans lequel le caoutchouc naturel est obtenu par contrôle de sa teneur en eau à 40% en masse ou moins et par son maintien ainsi pendant au moins 72 heures ou plus.

7. Caoutchouc naturel comme décrit dans la revendication 6, dans lequel un latex de caoutchouc naturel est coagulé avec un agent de coagulation acide, et le caoutchouc coagulé est soumis à un traitement de déshydratation dans 8 heures après l'ajout de l'agent de coagulation acide.

8. Caoutchouc naturel comme décrit dans l'une quelconque des revendications 1 à 4, dans lequel le caoutchouc naturel est obtenu par ajout de 0,01 à 3 parties en masse d'un agent de réticulation comportant un groupe fonctionnel, lequel dispose de la capacité de réagir par multi-couplage et/ou par ajout, à 100 parties en masse d'un latex de caoutchouc naturel en tant que solide ou d'un caoutchouc naturel.

9. Caoutchouc naturel comme décrit dans la revendication 8, dans lequel l'agent de réticulation est au moins un agent choisi parmi un groupe constitué par des composés du type divinyle, dihydrazide et dithiol.

10. Composition de caoutchouc contenant le caoutchouc naturel comme décrit dans l'une quelconque des revendications 1 à 9.

11. Pneu préparé en utilisant la composition de caoutchouc comme décrit dans la revendication 10.

12. Procédé de production pour un caoutchouc naturel, **caractérisé en ce qu'**il comprend :
le contrôle d'une teneur en eau d'un latex de caoutchouc naturel ou d'un caoutchouc naturel à 40% en masse ou moins et le maintien ainsi du latex de caoutchouc naturel ou du caoutchouc naturel au moins pendant 72 heures ou plus de manière à ainsi produire un caoutchouc naturel comprenant :
15% en masse ou plus d'un composant de poids moléculaire élevé, soit P1, présentant un poids moléculaire de 5 000 000 à 50 000 000 ; et
40% en masse ou moins d'un composant de poids moléculaire ultraléger, soit P2, présentant un poids moléculaire excédant 50 000 000 ; et
la relation entre le % en masse de P1 et le % en masse de P2 est :
1,5 x % en masse de P1 ≥ % en masse de P2,
chacun étant mesuré au moyen du procédé de mesure qui suit, dans lequel un procédé de mesure pour un poids moléculaire de caoutchouc est mesuré au moyen d'un équipement de fractionnement par couplage flux-force avec un détecteur de diffusion de la lumière multi-angle pour une partie soluble d'une solution de caoutchouc centrifugée à une accélération centrifuge de 10 000 à 1 000 000 G.

13. Procédé de production pour un caoutchouc naturel comme décrit dans la revendication 12, dans lequel un latex de caoutchouc naturel est coagulé avec un agent de coagulation acide, et le caoutchouc coagulé est soumis à un traitement de déshydratation dans 8 heures après l'ajout de l'agent de coagulation acide.

14. Procédé de production pour un caoutchouc naturel comme décrit dans la revendication 12, dans lequel le caoutchouc naturel est obtenu par ajout de 16 parties en masse ou plus d'un latex écrémé en tant que solide à 100 parties en masse du latex de caoutchouc naturel en tant que solide.

15. Procédé de production pour un caoutchouc naturel comme décrit dans la revendication 12, **caractérisé en ce que** le caoutchouc naturel est obtenu par ajout de 0,01 à 3 parties en masse d'un agent de réticulation comportant un groupe fonctionnel, lequel dispose de la capacité de réagir par multi-couplage et/ou par ajout, à 100 parties en masse d'un latex de caoutchouc naturel en tant que solide ou d'un caoutchouc naturel.

16. Procédé de production pour un caoutchouc naturel comme décrit dans la revendication 15, dans lequel l'agent de réticulation est au moins un agent choisi parmi un groupe constitué par des composés du type divinyle, dihydrazide et dithiol.

17. Procédé de production d'un caoutchouc naturel comme décrit dans la revendication 15, **caractérisé en ce qu'**une force de cisaillement mécanique est exercée à une vitesse de cisaillement qui se situe dans une plage de 10 à 10 000 sec⁻¹.
